# EUROPÄISCHE PATENTSCHRIFT

(11) **EP 4 108 409 B1**
(45) Veröffentlichungstag und Bekanntmachung des Hinweises auf die Patenterteilung: **25.10.2023**
(21) Anmeldenummer: 22172075.8
(22) Anmeldetag: 06.05.2022
(51) Int. Cl.: B29C 45/14, B29C 45/44, B29D 23/00

(54) **SPRITZGIESSVERFAHREN UND SPREIZKERN**
INJECTION MOULDING METHOD AND COLLAPSIBLE CORE
PROCÉDÉ DE MOULAGE PAR INJECTION ET NOYAU EXPANSIBLE

(30) Priorität: 21.06.2021 DE 102021115973
(43) Veröffentlichungstag der Anmeldung: 28.12.2022
(73) Patentinhaber: Weber, Ronald, 4203 Altenberg bei Linz (AT)
(72) Erfinder: Weber, Ronald, 4203 Altenberg bei Linz (AT)
(74) Vertreter: Hoefer & Partner Patentanwälte mbB

(56) Entgegenhaltungen:
- WO-A1-03/053649
- JP-A- H05 185 492
- JP-A- 2001 277 305
- KR-A- 20000 049 311

## Beschreibung

Die Erfindung betrifft ein Spritzgießverfahren unter Verwendung eines Spreizkerns. Mit dem Spritzgießverfahren erfolgt das Spritzgießen auf einen extrudierten Hohlkörper. Des Weiteren zeigt die Erfindung den im Verfahren zu verwendenden Spreizkern.

Um extrudierte Hohlkörper im Spritzgießprozess weiterverarbeiten zu können, müssen diese in der Praxis in einem sehr engen Toleranzbereich gefertigt werden, damit der Spritzgießprozess funktioniert. Es muss in der Regel von der Innenseite des Hohlkörpers entgegen dem Spritzdruck gehalten bzw. gestützt werden. Zusätzlich oder alternativ ist es auch nötig, das Innere des Hohlkörpers gegen die Schmelze abzudichten. Kommt die Stirnfläche des Hohlkörpers mit der Schmelze in Berührung, so kommt es durch den Spritzdruck auf die Stirnfläche teilweise zu sehr hohen Ausschubkräften auf den Hohlkörper, welche bei längeren Hohlkörpern nicht über das Spritzgießwerkzeug abgefangen werden können.

Extrudate, welche keine hohle Geometrie aufweisen, können in einem sehr engen Toleranzbereich kalibriert werden. Es ist also keine Herausforderung, derartige Vorprodukte in ein Spritzgießwerkzeug einzulegen und zusätzliche Elemente anzuspritzen. Bei der Extrusion von Hohlkörpern allerdings wird in der Regel nur außen kalibriert. Schwankungen in der Schmelzesteifigkeit (beim Extrusionsprozess) führen trotz guter Zentrierung von Düse und Dorn aufgrund des unterschiedlichen Treibverhaltens der Schmelze zu unterschiedlichen Wanddicken am Umfang. Derartige Wanddickenunterschiede kommen in der angedachten Anwendung des Hohlkörpers nicht zwingend zum Tragen, sind jedoch in weiterer Folge für den Spritzgießprozess sehr schwer beherrschbar. Zum Einsatz bei der Extrusion kommen sehr oft Polyolefine wie Polyethylen, Polypropylen oder Polybuthylen, welche eine relativ geringe Druckfestigkeit aufweisen.

DE 1 255 290 B zeigt ein Verfahren Verbindungen direkt auf Hohlkörper aufzuspritzen. Um hier die Kavität des Hohlkörpers gegenüber der Kunststoffschmelze abzudichten, ist eine genaue Fertigung des Hohlkörpers erforderlich, damit der Spritzgießkern die Innenfläche des Hohlkörpers abdichten kann. Es ist relativ schwer, die durch den Spritzdruck entstehenden Ausschubkräfte auf den Hohlkörper abzufangen. Bei kurzen Hohlkörpern kann am Ende des Hohlkörpers ein Anschlag angebracht werden. Bei langen Hohlkörpern führt dies jedoch nicht mehr zum Ziel, da der Hohlkörper durch die hohe axiale Belastung ausknickt. Die Kraftübertragung durch Reibung, um ein Ausschieben zu verhindern, ist in dieser Größenordnung sehr schwer zu realisieren, da die Kunststoffhohlkörper dem Pressdruck ausweichen und gegebenenfalls sogar beulen.

Das Gebrauchsmuster DE 295 01 646 U1 zeigt ein Umspritzen von Metallflanschen, welche im Spritzgießverfahren an Kunststoffhohlkörper angebunden werden. Auch bei der Umsetzung dieser Technologie treten die Probleme auf, dass in der Praxis in sehr engen Toleranzen der Wanddicken extrudiert werden muss und hohe Ausschubkräfte abgefangen werden müssen.

JP H05 185492 A beschreibt einen Prozess zur Herstellung eines Harzschlauches, beispielsweise Luftleitungsschläuche, Füllschleuche oder dergleichen für Kraftfahrzeuge.

KR 2000 0049311 A zeigt eine automatische Injektionsvorrichtung für Kunstharzprodukte, die ein Verbindungsrohr in einen Körper gießen kann, wobei eine Nut an der Innenseite des Kunstharzartikels spritzgegossen wird.

Es ist Aufgabe vorliegender Erfindung, ein Spritzgießverfahren anzugeben, das ein effizientes Spritzgießen eines Spritzgießmaterials auf einen extrudierten Hohlkörper ermöglicht. Insbesondere soll unter Aufwendung geringer Schließkräfte die Weiterverarbeitung des extrudierten Hohlkörpers im Spritzgießverfahren prozesssicher durchgeführt werden können.

Die Lösung der Aufgabe erfolgt durch die Merkmale der unabhängigen Ansprüche. Die abhängigen Ansprüche haben bevorzugte Weiterbildungen der Erfindung zum Gegenstand.

Die Erfindung zeigt ein Spritzgießverfahren umfassend die folgenden Schritte:
Zunächst erfolgt das Einlegen eines Hohlkörpers in ein Spritzgießwerkzeug. Bei dem Hohlkörper handelt es sich insbesondere um einen extrudierten Hohlkörper, insbesondere aus Kunststoff. Das Spritzgießwerkzeug befindet sich insbesondere in einer Spritzgießmaschine.

Im nächsten Schritt erfolgt ein Spreizen eines Spreizkerns in dem Hohlkörper. Theoretisch kann der Spreizkern auch schon vor dem Einsetzen in das Spritzgießwerkzeug in den Hohlkörper eingesetzt werden. In der praktischen Umsetzung ist der Spreizkern jedoch in das Spritzgießwerkzeug integriert und fährt automatisiert in den Hohlkörper ein. Im Hohlkörper wird der Spreizkern gespreizt. Bei dem Spreizkern, welcher auch als Einfallkern bezeichnet werden kann, handelt es sich um einen Kern, der in seinem Durchmesser vergrößerbar ist, so dass das Ein- und Ausfahren in den Hohlkörper erleichtert wird.

Die Innenkontur des Hohlkörpers und somit die Außenkontur des Spreizkerns sind vorzugsweise rund oder oval. Allerdings können hier auch komplexere Konturen realisiert werden. An seiner Außenkontur weist der Spreizkern zumindest eine Erhebung auf. Im nicht gespreizten bzw. eingefallenen Zustand des Spreizkerns ist es unerheblich, ob diese Erhebung tatsächlich nach außen ragt. Entscheidend ist, dass die Erhebung im gespreizten Zustand von der restlichen Außenkontur des Spreizkerns hervorragt. Diese zumindest eine Erhebung ist zum Lagefixieren und/oder Abdichten des Hohlkörpers ausgebildet und dringt hierzu materialverdrängend in den Hohlkörper ein. Aufgrund der geringen Oberfläche der Erhebung(en) und der relativ geringen Festigkeit von thermoplastischen Kunststoffen wie Polyolefinen sind hierfür nur relativ geringe Schließkräfte erforderlich. Mit anderen Worten wird aufgrund der geringen Oberfläche der Erhebung(en) eine derart große Flächenpressung erzeugt, dass nur relativ geringe Schließkräfte erforderlich sind, um in den extrudierten Hohlkörper, unter Berücksichtigung der relativ geringen Festigkeit von thermoplastischen Kunststoffen wie Polyolefinen, einzudringen.

Durch das Eindringen der Erhebung in den Hohlkörper kann der Spreizkern zum Halten und somit Lagefixieren des Hohlkörpers innerhalb des Spritzgießwerkzeugs genutzt werden. Zusätzlich oder alternativ kann die Erhebung auch so ausgebildet sein, dass sie zwischen der Innenkontur des Hohlkörpers und der Außenkontur des Spreizkerns abdichtet. Hierzu ist die Erhebung insbesondere vollumfänglich als geschlossener Ring ausgebildet.

Im nächsten Schritt erfolgt das Spritzgießen eines Spritzgießmaterials, insbesondere Kunststoff, auf den Hohlkörper. Dies erfolgt, während der Spreizkern im Hohlkörper gespreizt ist. Das Spritzgießen "auf" den Hohlkörper beschreibt auch, dass das Material vollständig oder teilweise seitlich (z.B. an der Stirnseite des Hohlkörpers) und/oder vollständig oder teilweise in den Hohlkörper, also in die Kavität des Hohlkörpers, gespritzt wird. So kann der Spreizkern beispielsweise nur einen Teil der Kavität ausfüllen, wohingegen der andere Teil der Kavität im Spritzgießverfahren mit Kunststoff zumindest teilweise gefüllt wird. Bei den meisten Anwendungsfällen wird jedoch der Spreizkern die Kavität des Hohlkörpers vollständig abdichten und der Kunststoff wird an den Außenumfang und/oder die Stirnseite des Hohlkörpers angespritzt.

An der zumindest einen Erhebung ist ein Außenmaß der Erhebung definiert. Bei diesem Außenmaß handelt es sich insbesondere um den Durchmesser des gespreizten Spreizkerns im Bereich der Erhebung. An der Kontaktstelle zwischen der Erhebung und dem Hohlkörper ist ein Innenmaß des Hohlkörpers definiert. Bei dem Innenmaß des Hohlkörpers handelt es sich insbesondere auch um einen Innendurchmesser. Das Innenmaß des Hohlkörpers beschreibt das Sollmaß; das tatsächliche Innenmaß liegt zwischen einer Toleranzuntergrenze und einer Toleranzobergrenze, zwischen denen das Innenmaß beim Extrudieren des Hohlkörpers schwankt.

Diese Toleranzgrenzen sind grundsätzlich auf zweierlei Arten zu verstehen: Zum einen wird berücksichtigt, dass ein einzelner Hohlkörper an unterschiedlichen Stellen unterschiedliche Innenmaße aufweisen kann, die zwischen dieser Toleranzuntergrenze und Toleranzobergrenze liegen. Weist beispielsweise ein runder Hohlkörper eine fertigungsbedingte Ovalität auf, so kann die längere Achse des ovalen Querschnitts der Toleranzobergrenze entsprechen und die kurze Achse des ovalen Querschnitts der Toleranzuntergrenze. Zum zweiten wird auch berücksichtigt, dass das hier beschriebene Verfahren für eine Vielzahl an Hohlkörpern in der Serien- oder Massenfertigung verwendet wird. Dementsprechend bezieht sich die Beschreibung des Toleranzbereichs auch auf den Unterschied im Innenmaß zwischen mehreren Hohlkörpern; so kann beispielsweise ein erster zu verarbeitender Hohlkörper ein anderes tatsächliches Innenmaß innerhalb des Toleranzbereichs aufweisen, als ein zweiter zu verarbeitender Hohlkörper - wobei beide Hohlkörper das gleiche Sollmaß aufweisen.

Bevorzugt ist vorgesehen, dass das Außenmaß der zumindest einen Erhebung größer ist als die Toleranzobergrenze des Innenmaßes. Werden mehrere Erhebungen verwendet, so sind vorzugsweise alle Erhebungen größer als die Toleranzobergrenze des Innenmaßes. Dadurch wird erreicht, dass die Erhebungen mindestens so hoch konstruiert sind, wie die Wanddicke des Hohlkörpers im Extrusionsprozess schwanken kann.

Die Bereiche des Spreizkerns, welche nicht mit Erhebung versehen ist, werden als "Anlagebereiche" bezeichnet. Der Anlagebereich kann an der Innenfläche des Hohlkörpers anliegen; allerdings kann der Anlagebereich auch etwas von der Innenfläche des Hohlkörpers beabstandet sein. Letztendlich ist der Anlagebereich des Spreizkerns zur nichtmaterialverdrängenden Positionierung im Hohlkörper ausgebildet. Das Außenmaß dieses Anlagebereichs ist vorzugsweise höchstens so groß, wie die Toleranzuntergrenze des Innenmaßes. Dadurch wird erreicht, dass lediglich mit den Erhebungen, jedoch nicht mit dem restlichen Bereich des Spreizkerns (Anlagebereich) eine Materialverdrängung erfolgt.

So ist sichergestellt, dass der Spreizkern nur geringe Mengen an Material zum Fließen (Verdrängen) bringt. Wäre die Außenkontur des Spreizkerns wesentlich größer als die Toleranzobergrenze, so hätte dies eine relativ hohe Schließkraft zur Folge, da das überschüssige Material verdrängt werden müsste. Durch die hier bevorzugte Ausgestaltung der Erhebung kommt es zu einem Eindringen der Erhebungen in die Hohlkörperinnenfläche und somit zum Formschluss zwischen Hohlkörper und Spreizkern, welcher eine Abdichtung der Spritzkavität zum Hohlkörperinneren hervorruft und gleichzeitig auch den Ausschubkräften entgegenwirken kann.

Beim Spritzgießen des Spritzgießmaterials wirkt durch den Spritzdruck eine Ausschubkraft auf den Hohlkörper; hier von Interesse ist die maximal wirkende Ausschubkraft. Vorzugsweise ist vorgesehen, dass die zumindest eine Erhebung - bei Verwendung mehrerer Erhebungen alle Erhebungen - in Größe, Position und Anzahl so ausgebildet ist/sind, dass zumindest 25%, vorzugsweise zumindest 50%, dieser maximalen Ausschubkraft über die Erhebung/Erhebungen abgestützt wird. Werden mehrere Erhebungen verwendet, so kann sich die Ausschubkraft auf alle Erhebungen abstützen, so dass vorzugsweise die Summe der Erhebungen die zumindest 25% der Ausschubkraft abstützen.

Im Folgenden ist ein Spreizkern zum Spritzgießen definiert. Dieser ist zur Verwendung in dem bisher beschriebenen Spritzgießverfahren ausgebildet. Dies bedeutet, dass die hier beschriebenen vorteilhaften Ausgestaltungen des Spreizkerns und die in den Ansprüchen erwähnten Merkmale des Spreizkerns auch vorteilhaft im Rahmen des Spritzgießverfahrens zur Anwendung kommen können.

Der Spreizkern weist einen Anlagebereich zum Anliegen in einen extrudierten Hohlkörper auf. Bei dem extrudierten Hohlkörper handelt es sich insbesondere um den vorab bereits beschriebenen Hohlkörper. Der Anlagebereich muss nicht zwingend in Kontakt kommen mit dem Hohlkörper, sondern kann je nach Toleranz des Hohlkörpers auch von der Innenfläche des Hohlkörpers beabstandet sein. Von dem Anlagebereich steht zumindest eine Erhebung vor, die dazu ausgebildet ist, beim Spreizen des Spreizkerns lagefixierend und/oder abdichtend materialverdrängend in den Hohlkörper einzudringen.

Zur weiteren Ausgestaltung und Positionierung der zumindest einen Erhebung sind imaginäre Erhebungsbereiche am Außenumfang des Spreizkerns definiert. Der Spreizkern weist zumindest einen Erhebungsbereich auf. Jeder Erhebungsbereich erstreckt sich in Umfangsrichtung um den Spreizkern. Die zumindest eine Erhebung befindet sich in diesem Erhebungsbereich.

Der Spreizkern weist vorzugsweise mehrere in Axialrichtung hintereinander angeordnete Erhebungsbereiche auf. In jedem Erhebungsbereich befindet sind zumindest eine Erhebung.

Vorzugsweise ist vorgesehen, dass in zumindest einem Erhebungsbereich eine Erhebung vorgesehen ist, die sich vollumfänglich und somit geschlossen ringförmig erstreckt. Diese Erhebung dient neben der Lagefixierung auch zum Abdichten. Wenn nur eine Erhebung und nur ein Erhebungsbereich vorgesehen sind, kann sich diese eine Erhebung wie hier beschrieben vollumfänglich und somit geschlossen ringförmig erstrecken. Wenn mehrere Erhebungsbereiche vorgesehen sind, kann sich in einem, mehreren oder allen Erhebungsbereichen die Erhebung vollumfänglich und geschlossen ringförmig erstrecken.

Des Weiteren ist bevorzugt vorgesehen, dass in zumindest einem Erhebungsbereich eine nicht-umfängliche Erhebung oder mehrere, voneinander beabstandete Erhebungen, vorgesehen ist/sind. Auch wenn es nur einen Erhebungsbereich gibt, ist diese Ausgestaltung mit nicht-umfänglichen Erhebungen möglich; sodann ist keine vollständige Abdichtung, sondern lediglich die Lagefixierung vorgesehen.

Die einzelne Erhebung kann vorzugsweise einen mehreckigen Querschnitt oder einen konvex gekrümmten Querschnitt aufweisen. Der mehreckige Querschnitt kann auch so ausgebildet sein, dass die Erhebung spitz, beispielsweise dreiecksförmig ausgebildet ist. Dabei ist vorzugsweise darauf zu achten, dass die gesamte Breite des Querschnitts der Erhebung nur eine geringe projizierte Oberfläche aufweist. Die Kanten der Erhebung sind vorzugsweise verrundet, um Kerbwirkungen im fertigen Produkt wie auch im Spreizkern zu vermeiden.

Die Erhebung ist vorzugsweise hinterschneidungsfrei. Dies bedeutet insbesondere, dass ein Hinterschnitt der Geometrie gegenüber dem Lot zur Spreizkernachse zu vermeiden ist, da solch ein Hinterschnitt zu erhöhten Entformungskräften führen kann.

Die zumindest eine Erhebung weist eine Erhebungshöhe auf. Mit dieser Erhebungshöhe ragt die jeweilige Erhebung über den angrenzenden Anlagebereich, also den restlichen Bestandteil des Spreizkerns hinaus. Die Erhebungshöhe sollte nicht zu groß gewählt werden, da die Erhebung nicht formgebend sein soll, sondern die plastische Verformung des Hohlkörpers nur zum Zwecke der Lagefixierung und/oder Abdichtung erfolgt. Insbesondere ist vorgesehen, dass für jede Erhebung die Erhebungshöhe höchstens 2%, vorzugsweise höchstens 1%, besonders vorzugsweise höchstens 0,5%, des Außenmaßes des Anlagebereichs beträgt. Dabei ist das Außenmaß, insbesondere Außendurchmesser, des Anlagebereichs unmittelbar neben der jeweiligen Erhebung ausschlaggebend.

Die Erfindung umfasst ferner ein Leitungsbauteil, hergestellt, nach dem hier beschriebenen Spritzgießverfahren. Insbesondere handelt es sich bei dem Leitungsbauteil um den extrudierten Hohlkörper mit angespritztem Spritzgießmaterial, wobei das Spritzgießmaterial dabei ein Verbindungselement bildet.

Weitere Einzelheiten, Vorteile und Merkmale der vorliegenden Erfindung ergeben sich aus nachfolgender Beschreibung eines Ausführungsbeispiels anhand der Zeichnung. Es zeigen:
- Fig. 1: einen schematischen Schnitt durch ein Spritzgießwerkzeug zur Darstellung des erfindungsgemäßen Spritzgießverfahrens gemäß dem Ausführungsbeispiel unter Verwendung des erfindungsgemäßen Spreizkerns gemäß dem Ausführungsbeispiel;
- Fig. 2 und 3: zwei unterschiedliche Ausgestaltungen einer Erhebung;
- Fig. 4 und 5: schematische Darstellungen zur Erläuterung der Toleranzuntergrenze und Toleranzobergrenze; und
- Fig. 6: eine schematische Darstellung zur Erläuterung der Erhebungsbereiche.

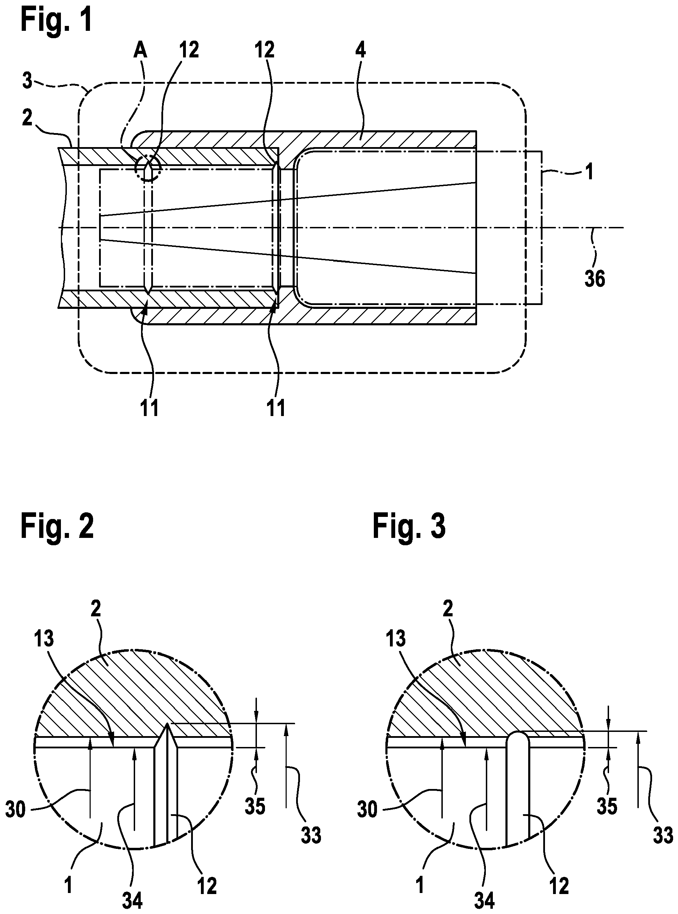

Im Folgenden wird anhand der Fig. 1 bis 6 das erfindungsgemäße Spritzgießverfahren gemäß einem Ausführungsbeispiel unter Verwendung eines erfindungsgemäßen Spreizkerns 1 im Detail dargestellt.

Fig. 1 zeigt in einer Schnittdarstellung ein Spritzgießwerkzeug 3 mit einer Spritzgießkavität 4. In diese Spritzgießkavität 4 wird während des Spritzgießverfahrens das Spritzgießmaterial eingespritzt.

In dem Spritzgießwerkzeug 3 ist ein extrudierter Hohlkörper 2 eingelegt. Die schematische Darstellung in Fig. 1 zeigt, dass der Hohlkörper 2 aus dem Spritzgießwerkzeug 3 herausragen kann und somit auch wesentlich länger als das Spritzgießwerkzeug 3 sein kann.

In den Hohlraum des Hohlkörpers 2 ist der Spreizkern 1 eingefahren und gespreizt. Auf der Außenkontur des Spreizkerns 1 sind zwei Erhebungsbereiche 11 vorgesehen. Jeder Erhebungsbereich 11 erstreckt sich in Umfangsrichtung um eine Kernachse 36. Im gezeigten Ausführungsbeispiel befindet sich an jedem Erhebungsbereich 11 eine vollumfänglich und somit ringförmig geschlossene Erhebung 12. Durch das Spreizen des Spreizkerns 1 sind die beiden Erhebungen 12 materialverdrängend in den Hohlkörper 2 eingedrungen. Dadurch fixiert der Spreizkern 1 den Hohlkörper 2 in seiner Lage; der Spritzdruck wird zumindest teilweise über die Erhebungen 12 und den Spreizkern 1 aufgenommen. Gleichzeitig dienen die Erhebungen 12, insbesondere die dem Spitzende des Hohlkörpers 2 zugewandte Erhebung 12 (rechte Erhebung 12 in Fig. 1) zum Abdichten des Innenraums des Hohlkörpers 2 gegenüber der Spritzgießkavität 4 bzw. dem einzuspritzenden Spritzgießmaterial.

Fig. 2 und 3 zeigen das in Fig. 1 gekennzeichnete Detail A. Gemäß Fig. 2 ist die Erhebung 12 spitz bzw. dreiecksförmig im Querschnitt ausgebildet. Fig. 3 zeigt eine alternative Ausgestaltung des Querschnitts der Erhebung 12 mit einer konvexen Krümmung.

Die beiden Fig. 2 und 3 zeigen einen Anlagebereich 13, der den Bereich des Spreizkerns 1 ohne Erhebungen 12 beschreibt. Ferner zeigen diese Figuren ein Innenmaß (Sollmaß) 30 als Innendurchmesser des Hohlkörpers 2. Der maximale Außendurchmesser der Erhebungen 12 wird als Außenmaß 33 bezeichnet. Die jeweilige Erhebung 12 erhebt sich mit ihrer Erhebungshöhe 35 von dem Anlagebereich 13. Der Außendurchmesser des Anlagebereichs 13 wird als Außenmaß 34 bezeichnet.

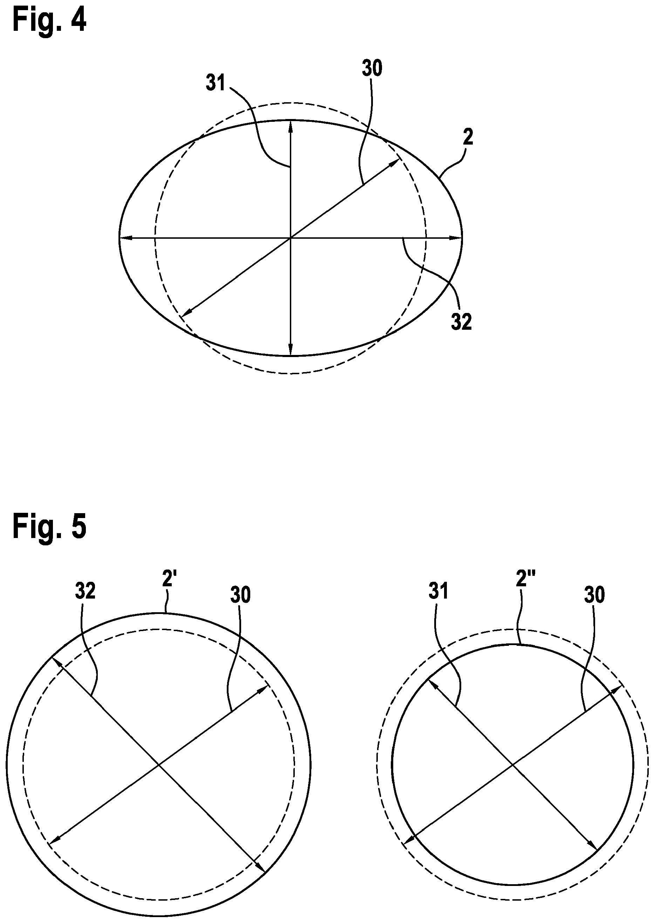

Fig. 4 zeigt eine erste mögliche Toleranzabweichung des Hohlkörpers 2. Rein schematisch dargestellt ist mit gestrichelter Linie die Innenkontur (Innendurchmesser) des Hohlkörpers 2 mit dem Innenmaß 30. Kommt es bei der Extrusion des Hohlkörpers 2 zu einer Ovalität oder sonstigen unrunden Form an der Innenkontur, so kann das Innenmaß 30 des Hohlkörpers 2 zwischen der bezeichneten Toleranzuntergrenze 31 (kurze Achse des Ovals) und der Toleranzobergrenze 32 (lange Achse des Ovals) schwanken.

Wie im einleitenden Teil beschrieben wurde, ist das Außenmaß 33 der Erhebungen 12 vorzugsweise größer als die Toleranzobergrenze 32, so dass es zwangsläufig an jeder Stelle des Hohlkörpers 2 zu einem materialverdrängenden Eindringen der Erhebungen 12 kommt. Der Anlagebereich 13 mit seinem Außenmaß 34 ist vorzugsweise höchstens so groß wie die Toleranzuntergrenze 31.

Fig. 5 zeigt ein zweites Verständnis der Toleranz des Innenmaßes 30. Gezeigt sind zwei unterschiedliche Hohlkörper 2' und 2", die jeweils das gleiche Innenmaß 30 aufweisen. Auch in dieser Konstellation kann das Innenmaß 30 zwischen der Toleranzuntergrenze 31 und der Toleranzobergrenze 32 schwanken. Auch für diesen Fall können das hier vorgesellte Spritzgießverfahren und der Spreizkern 1 sinnvoll eingesetzt werden.

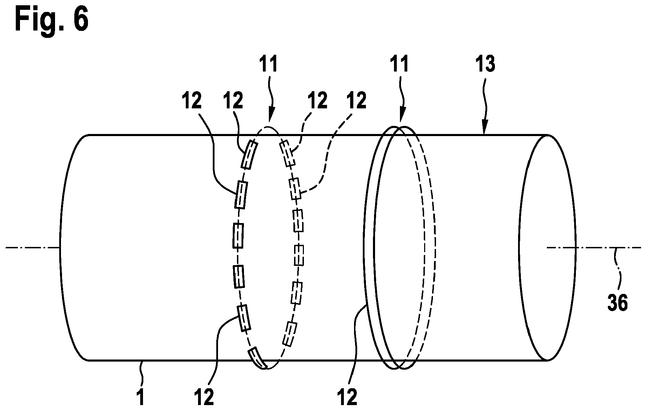

Fig. 6 zeigt rein schematisch, dass in einem Erhebungsbereich 11 sowohl eine vollumfänglich geschlossene Erhebung 12 angeordnet werden kann als auch mehrere Erhebungen 12. In dem in Fig. 6 links dargestellten Erhebungsbereich 11 sind mehrere Erhebungen 12 entlang des Umfangs verteilt und beabstandet zueinander angeordnet. Solche Erhebungen 12 dienen zur Lagefixierung des Hohlkörpers 2 im Spritzgießwerkzeug 3 und nicht primär zum Abdichten.

### Bezugszeichenliste

- 1: Spreizkern
- 2: Hohlkörper
- 3: Spritzgießwerkzeug
- 4: Spritzgießkavität
- 11: Erhebungsbereiche
- 12: Erhebungen
- 13: Anlagebereich
- 30: Innenmaß (Sollmaß)
- 31: Toleranzuntergrenze
- 32: Toleranzobergrenze
- 33: Außenmaß der Erhebung
- 34: Außenmaß des Anlagebereichs
- 35: Erhebungshöhe
- 36: Kernachse

## Patentansprüche

1. Spritzgießverfahren umfassend die folgenden Schritte
Einlegen eines extrudierten Hohlkörpers (2) in ein Spritzgießwerkzeug (3),
Spreizen eines Spreizkerns (1) in dem Hohlkörper (2), wobei der Spreizkern (1) an seiner Außenkontur zumindest eine Erhebung (12) aufweist, die beim Spreizen zum Lagefixieren und/oder Abdichten des Hohlkörpers (2) materialverdrängend in den Hohlkörper (2) eindringt,
Spritzgießen eines Spritzgießmaterials auf den Hohlkörper (2), während der Spreizkern (1) im Hohlkörper (2) gespreizt ist.

2. Spritzgießverfahren nach Anspruch 1,
wobei die zumindest eine Erhebung (12) ein Außenmaß (33) aufweist und an der Kontaktstelle zwischen Erhebung (12) und Hohlkörper (2) ein Innenmaß (30) des Hohlkörpers (2) definiert ist,
wobei das Innenmaß (30) des Hohlkörpers (2) zwischen einer Toleranzuntergrenze (31) und einer Toleranzobergrenze (32) liegt,
und wobei das Außenmaß (33) der zumindest einen Erhebung (12) größer ist als die Toleranzobergrenze (32) des Innenmaßes.

3. Spritzgießverfahren nach Anspruch 2,
wobei der gespreizte Spreizkern (1) einen Anlagebereich (13) zur nichtmaterialverdrängenden Positionierung im Hohlkörper (2) aufweist,
und wobei ein Außenmaß (34) des Anlagebereichs (13) maximal so groß ist, wie die Toleranzuntergrenze (31) des Innenmaßes (30).

4. Spritzgießverfahren nach einem der vorhergehenden Ansprüche, wobei beim Spritzgießen des Spritzgießmaterials durch den Spritzdruck eine maximale Ausschubkraft auf den Hohlkörper (2) wirkt, und wobei die zumindest eine Erhebung (12) in Größe, Position und Anzahl so ausgebildet ist/sind, dass zumindest 25%, vorzugsweise zumindest 50%, der Ausschubkraft über die zumindest eine Erhebung (12) abgestützt wird.

5. Spreizkern zum Spritzgießen, ausgebildet zur Verwendung in dem Spritzgießverfahren nach einem der vorhergehenden Ansprüche, umfassend
einen Anlagebereich (13) zum Anliegen an einem extrudierten Hohlkörper (2) und zumindest eine, vom Anlagebereich (13) hervorstehende Erhebung (12), die dazu ausgebildet ist, beim Spreizen zum Lagefixieren und/oder Abdichten des Hohlkörpers (12) materialverdrängend in den Hohlkörper (12) einzudringen.

6. Spreizkern nach Anspruch 5, umfassend zumindest einen Erhebungsbereich (11), der sich in Umfangsrichtung um den Spreizkern (11) erstreckt, wobei sich die zumindest eine Erhebung (12) in diesem Erhebungsbereich (11) befindet.

7. Spreizkern nach Anspruch 6, umfassend mehrere, in Axialrichtung hintereinander angeordnete Erhebungsbereiche (11) mit jeweils zumindest einer Erhebung (12).

8. Spreizkern nach einem der Ansprüche 6 oder 7, wobei in zumindest einem Erhebungsbereich (11) eine Erhebung (12) vorgesehen ist, die sich vollumfänglich und somit geschlossen ringförmig erstreckt.

9. Spreizkern nach einem der Ansprüche 6 bis 8, wobei in zumindest einem Erhebungsbereich (11) eine nicht-umfängliche Erhebung (12) oder mehrere, voneinander beabstandete Erhebungen (12) vorgesehen ist/sind.

10. Spreizkern nach einem der Ansprüche 5 bis 9, wobei die zumindest eine Erhebung (12) einen mehreckigen Querschnitt oder einen konvex gekrümmten Querschnitt aufweist.

11. Spreizkern nach einem der Ansprüche 5 bis 10, wobei die zumindest eine Erhebung (12) einen hinterschneidungsfreien Querschnitt aufweist.

12. Spreizkern nach einem der Ansprüche 5 bis 11, wobei die zumindest eine Erhebung (12) mit einer Erhebungshöhe (35) über den angrenzenden Anlagebereich (13) ragt, wobei der angrenzende Anlagebereich (13) im gespreizten Zustand ein Außenmaß (34), insbesondere Außendurchmesser, aufweist, wobei für jede Erhebung (12) die Erhebungshöhe (35) höchstens 2%, vorzugsweise höchstens 1%, besonders vorzugsweise höchstens 0,5%, des Außenmaßes (34) des Anlagebereichs (13) beträgt.

## Claims

1. An injection moulding method comprising the following steps
Inserting an extruded hollow body (2) into an injection moulding tool (3),
spreading a spreading core (1) in the hollow body (2), wherein the spreading core (1) comprises at least one protrusion (12) at its outer contour, which penetrates into the hollow body (2) in a material-displacing manner during spreading for fixing position and/or sealing the hollow body (2),
injection moulding an injection moulding material onto the hollow body (2), while the spreading core (1) is spread in the hollow body (2).

2. The injection moulding method according to claim 1,
wherein the at least one protrusion (12) comprises an outer dimension (33) and an inner dimension (30) of the hollow body (2) is defined at the contact position between protrusion (12) and hollow body (2),
wherein the inner dimension (30) of the hollow body (2) lies between a tolerance lower limit (31) and a tolerance upper limit (32),
and wherein the outer dimension (33) of the at least one protrusion (12) is bigger than the upper tolerance limit (32) of the inner dimension.

3. The injection moulding method according to claim 2,
wherein the spread spreading core (1) comprises an abutment portion (13) for non-material-displacing positioning in the hollow body (2),
and wherein an outer dimension (34) of the contact portion (13) is at most as large as the lower tolerance limit (31) of the inner dimension (30).

4. The injection moulding method according to one of the preceding claims, wherein a maximum push-out force acts on the hollow body (2) during injection moulding of the injection moulding material due to the injection pressure, and wherein the at least one protrusion (12) is/are adapted in size, position and number, such that at least 25%, preferably at least 50%, of the push-out force is supported via the at least one protrusion (12).

5. A spreading core for injection moulding, adapted for use in the injection moulding method according to one of the preceding claims, comprising
a contact portion (13) for abutment against an extruded hollow body (2)
and at least one protrusion (12) projecting from the contact portion (13) and adapted to penetrate into the hollow body (12) in a material displacing manner during spreading for fixing the position and/or sealing the hollow body (12).

6. The spreading core according to claim 5, comprising at least one protrusion region (11), which extends in the circumferential direction around the spreading core (11), wherein the at least one protrusion (12) is disposed in this protrusion region (11).

7. The spreading core according to claim 6, comprising protrusion regions (11) arranged one behind the other in axial direction, each with at least one protrusion (12).

8. The spreading core according to one of the claims 6 or 7, wherein a protrusion (12) is provided in at least one protrusion region (11), which extends fully peripherally and thus closed annularly.

9. The spreading core according to one of the claims 6 to 8, wherein a non-peripheral protrusion (12) or multiple protrusions (12) spaced apart from each other is/are provided in at least one protrusion region (11).

10. The spreading core of any one of claims 5 to 9, wherein the at least one protrusion (12) comprises a multicornered cross-section or a convexly curved cross-section.

11. The spreading core of any one of claims 5 to 10, wherein the at least one protrusion (12) comprises an undercut-free cross-section.

12. The spreading core according to one of the claims 5 to 11, wherein the at least one protrusion (12) projects with an elevation height (35) via the adjacent contact portion (13), wherein the adjacent contact portion (13) in the spread state comprises an outer dimension (34), in particular an outer diameter, wherein for each protrusion (12) the protrusion height (35) is at most 2%, preferably at most 1%, particularly preferably at most 0.5%, of the outer dimension (34) of the contact portion (13).

## Revendications

1. Procédé de moulage par injection comprenant les étapes suivantes
l'insertion d'un corps creux (2) extrudé dans un moule de moulage par injection (3),
l'écartement d'un noyau écartable (1) dans le corps creux (2), dans lequel le noyau écartable (1) présente sur son contour extérieur au moins une surélévation (12), qui lors de l'écartement pour la fixation en position et/ou l'étanchéification du corps creux (2) pénètre dans le corps creux (2) de manière à repousser la matière,
le moulage par injection d'une matière de moulage par injection sur le corps creux (2), pendant que le noyau écartable (1) est écarté dans le corps creux (2).

2. Procédé de moulage par injection selon la revendication 1,
dans lequel la au moins une surélévation (12) présente une dimension extérieure (33) et une dimension intérieure (30) du corps creux (2) est définie sur le point de contact entre la surélévation (12) et le corps creux (2),
dans lequel la dimension intérieure (30) du corps creux (2) se situe entre une limite inférieure de tolérance (31) et une limite supérieure de tolérance (32),
et dans lequel la dimension extérieure (33) de la au moins une surélévation (12) est supérieure à la limite supérieure de tolérance (32) de la dimension intérieure.

3. Procédé de moulage par injection selon la revendication 2,
dans lequel le noyau écartable (1) écarté présente une zone d'appui (13) pour le positionnement ne repoussant pas la matière dans le corps creux (2),
et dans lequel une dimension extérieure (34) de la zone d'appui (13) est au maximum aussi grande que la limite inférieure de tolérance (31) de la dimension intérieure (30).

4. Procédé de moulage par injection selon l'une quelconque des revendications précédentes, dans lequel lors du moulage par injection de la matière à mouler par injection une force d'éjection maximale agit sur le corps creux (2) au moyen de la pression d'injection, et dans lequel la au moins une surélévation (12) est/sont réalisées en taille, position et nombre de telle sorte qu'au moins 25 %, de préférence au moins 50 %, de la force d'éjection est soutenue par l'intermédiaire de la au moins une surélévation (12).

5. Noyau écartable pour le moulage par injection, réalisé pour être utilisé dans le procédé de moulage par injection selon l'une quelconque des revendications précédentes, comprenant
une zone d'appui (13) pour l'appui sur un corps creux (2) extrudé
et au moins une surélévation (12) faisant saillie de la zone d'appui (13), qui est réalisée pour pénétrer dans le corps creux (12) de manière à repousser la matière lors de l'écartement pour la fixation en position et/ou l'étanchéification du corps creux (12).

6. Noyau écartable selon la revendication 5, comprenant au moins une zone de surélévation (11), qui s'étend dans la direction périphérique autour du noyau écartable (11), dans lequel la au moins une surélévation (12) se trouve dans cette zone de surélévation (11).

7. Noyau écartable selon la revendication 6, comprenant plusieurs zones de surélévation (11) disposées les unes derrière les autres dans la direction axiale avec respectivement au moins une surélévation (12).

8. Noyau écartable selon l'une quelconque des revendications 6 ou 7, dans lequel une surélévation (12), qui s'étend sur toute la périphérie et ainsi en forme d'anneau fermé, est prévue dans au moins une zone de surélévation (11).

9. Noyau écartable selon l'une quelconque des revendications 6 à 8, dans lequel une surélévation (12) non périphérique ou plusieurs surélévations (12) espacées les unes des autres est/sont prévues dans au moins une zone de surélévation (11).

10. Noyau écartable selon l'une quelconque des revendications 5 à 9, dans lequel la au moins une surélévation (12) présente une section transversale polygonale ou une section transversale courbée de manière convexe.

11. Noyau écartable selon l'une quelconque des revendications 5 à 10, dans lequel la au moins une surélévation (12) présente une section transversale sans dégagement.

12. Noyau écartable selon l'une quelconque des revendications 5 à 11, dans lequel la au moins une surélévation (12) fait saillie avec une hauteur de surélévation (35) de la zone d'appui (13) adjacente, dans lequel la zone d'appui (13) adjacente présente dans l'état écarté une dimension extérieure (34), en particulier un diamètre extérieur, dans lequel pour chaque surélévation (12) la hauteur de surélévation (35) atteint au maximum 2 %, de préférence au maximum 1 %, de manière particulièrement préférée au maximum 0,5 %, de la dimension extérieure (34) de la zone d'appui (13).
